(19) Europäisches Patentamt
European Patent Office
Office européen des brevets

(11) **EP 4 521 519 A1**

(12) **EUROPEAN PATENT APPLICATION**

(43) Date of publication:
**12.03.2025 Bulletin 2025/11**

(21) Application number: **24197564.8**

(22) Date of filing: **30.08.2024**

(51) International Patent Classification (IPC):
**H01M 50/103** (2021.01) **H01M 50/117** (2021.01)
**H01M 50/124** (2021.01) **H01M 50/131** (2021.01)
**H01M 50/342** (2021.01)

(52) Cooperative Patent Classification (CPC):
**H01M 50/103; H01M 50/117; H01M 50/124;**
**H01M 50/131; H01M 50/3425;** H01M 50/119

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.09.2023 KR 20230120405**
**10.11.2023 KR 20230155172**

(71) Applicant: **SK On Co., Ltd.**
**Seoul 03161 (KR)**

(72) Inventors:
• **CHEONG, Hoemin**
**34124 Daejeon (KR)**
• **KWAK, Seung Ho**
**34124 Daejeon (KR)**
• **JU, Seung Hoon**
**34124 Daejeon (KR)**
• **PAK, Byeong Jun**
**34124 Daejeon (KR)**
• **LEE, Dong Hyee**
**34124 Daejeon (KR)**

(74) Representative: **Stolmár & Partner**
**Patentanwälte PartG mbB**
**Blumenstraße 17**
**80331 München (DE)**

(54) **BATTERY CELL**

(57) A battery cell of the present disclosure includes: an electrode assembly including a cathode, an anode, and a separator; and an exterior material accommodating the electrode assembly therein, wherein the exterior material includes: a first portion forming an accommodation space in which the electrode assembly is accommodated; a second portion formed integrally with the first portion; and a notch portion formed by recessing at least a part of the second portion and having a re-solidification layer on an outside of the second portion, and wherein the second portion includes a plurality of crystal grains, and the plurality of crystal grains of the second portion include an equiaxed microstructure.

FIG. 1

EP 4 521 519 A1

## Description

BACKGROUND OF THE INVENTION

1. Field

The present disclosure generally relates to a battery cell. Specifically, it relates to a battery cell in which different regions of an exterior material have different tensile strength.

2. Description of the Related Art

A secondary battery is made to convert electrical energy into chemical energy and store energy so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharge. In addition, the opposite process of this phenomenon is referred to as charging.

As the process of charging and discharging a secondary battery is repeated, a swelling phenomenon in which the internal pressure is increased and a large amount of heat is generated may occur. Since this swelling phenomenon may lead to explosion or fire, a method for controlling the internal pressure of secondary batteries is required.

SUMMARY OF THE INVENTION

A problem that the present disclosure aims to solve is to provide a battery cell in which the internal pressure is controlled to improve stability.

In addition, another problem that the present disclosure aims to solve is to provide a battery cell manufacturing method in which a notch portion is manufactured integrally with an exterior material to improve production efficiency.

The battery cell of the present disclosure can be widely applied in the field of green technology, such as electric vehicles, battery charging stations, solar power generation, and wind power generation using batteries. In addition, the battery cell of the present disclosure can be used in eco-friendly electric vehicles, hybrid vehicles, etc. to prevent climate change by suppressing air pollution and greenhouse gas emissions.

According to an embodiment of the present disclosure, a battery cell may include: an electrode assembly including a cathode, an anode, and a separator; and an exterior material accommodating the electrode assembly therein, wherein the exterior material includes: a first portion forming an accommodation space in which the electrode assembly is accommodated; a second portion formed integrally with the first portion; and a notch portion formed by recessing at least a part of the second portion and having a re-solidification layer on an outside of the second portion, and wherein the second portion a plurality of crystal grains, and the plurality of crystal grains of the second portion include an equiaxed microstructure.

The first portion may include a plurality of crystal grains, and the plurality of crystal grains of the first portion may be formed in an anisotropic structure.

The notch portion may be formed by recessing an outer surface of the exterior material toward inside of the battery cell and may have a groove shape.

The notch portion may further include a bottom portion forming a bottom surface; and a furrow disposed at a deeper level inside the exterior material than the bottom portion.

The ten-point average roughness of a surface of the notch portion may be higher than the ten-point average roughness of the peripheral portion.

The ten-point average roughness of a surface of the notch portion may exceed 20.

At least one crystal grain among the plurality of crystal grains may be partially cut.

The second portion may include: an overlapping portion overlapping the notch portion along a recession direction of the notch portion; and a cover portion positioned outside the notch portion along a width direction of the notch portion, which is formed to be perpendicular to a recession direction of the notch portion.

The standard deviation of the size of the plurality of crystal grains included in the overlapping portion may be 20 or less.

The standard deviation of the size of the plurality of crystal grains included in the cover portion may be 20 or less.

The absolute difference between an average value of the size of the plurality of crystal grains included in the overlapping portion and an average value of the size of the plurality of crystal grains included in the cover portion may be 3% or less.

The exterior material may further include: a body portion accommodating the electrode assembly and having the first portion and the second portion; and a cap portion including a cell tab that electrically connects the electrode assembly to the outside and covering the body portion, wherein the notch portion may be provided in the body portion.

The exterior material may further include a venting portion formed by recessing at least one surface of an inner surface of the exterior material and an outer surface provided in an opposite direction of the inner surface, wherein the notch portion and the venting portion may be positioned to be overlapping along a recession direction in which the at least one surface is recessed.

The shape of the notch portion may be deformed based on the internal pressure of the exterior material.

The notch portion may be opened when the internal pressure of the exterior material increases.

The notch portion may be formed integrally with the exterior material.

The re-solidification layer may include a vacancy defect.

The number of vacancy defects in the re-solidification layer may be equal to or greater than the number of vacancy defects in the second portion.

The number of vacancy defects in the second portion may be equal to or greater than the number of vacancy defects in the first portion.

The thickness of the re-solidification layer along a direction from the inside to the outside of the exterior material may be 5 μm or more.

The first portion may include a plurality of crystal grains, and the plurality of crystal grains of the first portion may be formed in an anisotropic structure.

The problem that the present disclosure aims to solve is to provide a battery cell in which the internal pressure is controlled to exhibit improved stability.

In addition, another problem that the present disclosure aims to solve is to provide a battery cell manufacturing method in which a notch portion is manufactured integrally with an exterior material to exhibit improved production efficiency.

## BRIEF DESCRIPTION OF THE DRAWINGS

FIGS. 1 and 2 illustrate a battery cell according to an embodiment of the present disclosure.

FIG. 3 illustrates a method for manufacturing an exterior material according to an embodiment of the present disclosure.

FIGS. 4 and 5 illustrate heating of an exterior material.

FIG. 6 illustrates processing of a notch portion in an exterior material.

FIGS. 7 and 8 illustrate enlarged diagrams of a notch portion of the present disclosure.

FIG. 9 illustrates an enlarged diagram of a first portion of the present disclosure.

FIGS. 10 to 12 illustrate various embodiments of a battery cell.

FIGS. 13A to 13C illustrate various embodiments of a notch portion of the present disclosure.

## DETAILED DESCRIPTION

Hereinafter, the present disclosure will be described in detail with reference to the attached drawings. This is merely illustrative, and the present disclosure is not limited to the specific embodiments described herein.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

Various embodiments of the present disclosure will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for illustrative purposes so that the present disclosure may be clearly understood. The directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in the present specification, singular expressions include plural expressions unless the context clearly dictates otherwise.

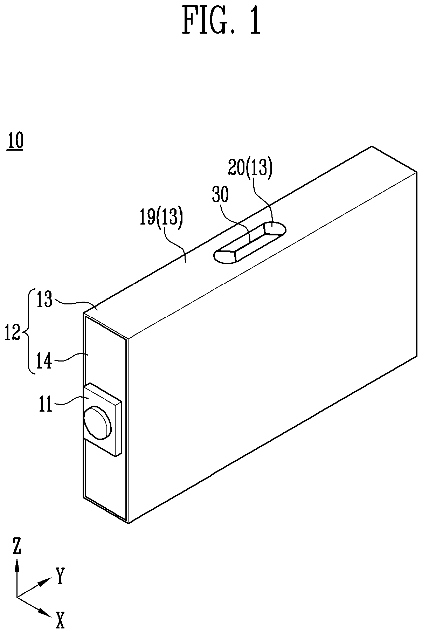

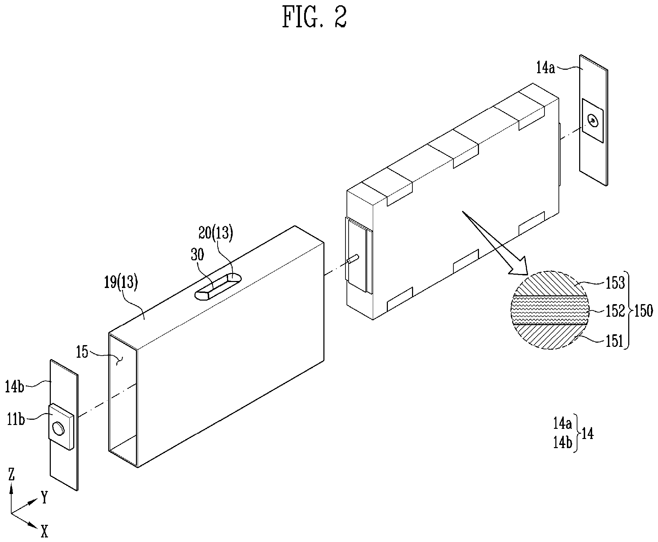

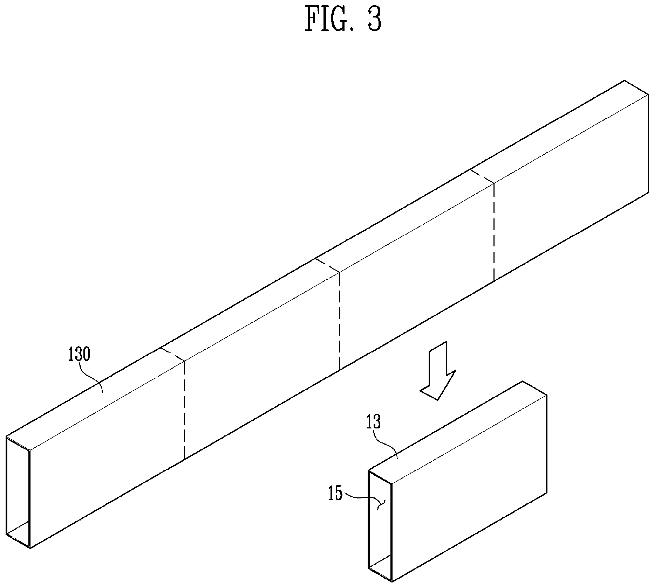

FIGS. 1 and 2 illustrate a battery cell 10 according to an embodiment of the present disclosure; and FIG. 3 illustrates a method for manufacturing an exterior material according to an embodiment of the present disclosure.

A battery cell 10 described in the present specification refers to a secondary battery that may be repeatedly used by charging and discharging electrical energy. For example, a battery cell may be a lithium secondary battery cell, but may not be limited thereto.

Battery cells 10 may include various shapes. For example, the battery cells 10 may be classified into a pouch-type secondary battery, a prismatic secondary battery, or a cylindrical secondary battery based on their shape. Referring to FIG. 1, the battery cell 10 according to an embodiment of the present disclosure, may include a prismatic secondary battery. However, embodiments of the present disclosure are not limited thereto.

A battery cell 10 of the present disclosure may include: an electrode assembly 150 including a cathode, an anode, and a separator; and an exterior material 12 accommodating the electrode assembly 150 therein, wherein the exterior material 12 may include: a first portion 19 forming an accommodation space in which the electrode assembly 150 may be accommodated; a second portion 20 which may be formed integrally with the first portion 19 and in which a preset region of the first portion 19 may be heated and cooled; and a notch portion 30 formed by recessing at least a part of the second portion 20 and having a re-solidification layer 25 on the outside, and wherein the second portion 20 may include a plurality of crystal grains, and the plurality of crystal grains of the second portion may be formed as an equiaxed microstructure.

A battery cell 10 may include an electrode assembly 150. Referring to FIG. 2, an electrode assembly 150 may include a cathode 151, an anode 153, and a separator 152. An electrode assembly 150 may be classified into a stacking type, a winding type, a stack-folding type, and a Z-stacking type depending on the method by which a cathode 151, an anode 153, and a separator 152 are stacked.

The type of an electrode assembly 150 included in a battery cell 10 of the present disclosure is not limited. In other words, an electrode assembly 150 included in a battery cell of the present disclosure may be an electrode assembly 150 manufactured by any one method of a stacking type, a winding type, a stack-folding type, and a Z-stacking type.

A cathode 151 and an anode 153 may include a current collector. A cathode 151 may include a cathode 151 current collector, and an anode 153 may include an anode 153 current collector. A current collector may include a known conductive material to an extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms such as film, sheet, and foil.

A cathode 151 and an anode 153 may include an active material. A cathode 151 may include a cathode active material, and an anode 153 may include an anode active material. A cathode active material may be a material which lithium ions may be inserted into and extracted from, and an anode active material may be a material which lithium ions may be adsorbed into and extracted from. For example, a cathode active material may be lithium metal oxide, and an anode active material may be any one of a carbon-based material such as crystalline carbon, amorphous carbon, carbon composite, and carbon fiber, a lithium alloy, silicon (Si), and tin (Sn).

In addition, a cathode 151 and an anode 153 may further include a binder and a conductive material to improve mechanical stability and electrical conductivity, respectively.

A separator 152 may be configured to prevent an electrical short circuit between a cathode 151 and an anode 153 and to allow a flow of ions through its structure. The separator 152 may be disposed between the cathode 151 and the anode 153, the separator physically separating the cathode 151 and the anode 153 but allowing the flow of the ions. The type of a separator is not particularly limited, but may include a porous polymer film. For example, a separator may include a porous polymer film or a porous nonwoven fabric.

An electrolyte may include an electrolyte solution. An electrolyte solution may be a nonaqueous electrolyte solution. The electrolyte solution may include a lithium salt and an organic solvent. The electrolyte solution may further include an additive. The additive may form a film on a cathode or an anode through a chemical reaction inside a battery. For example, a cathode interface film may be formed on a cathode, and an anode interface film may be formed on an anode.

In an embodiment, an exterior material 12 may be manufactured using extrusion. Referring to FIG. 3, one region of an exterior material body 130 may be extruded to form an empty space in an internal region. Afterwards, the exterior material body 130 may be cut in a preset interval to manufacture a plurality of exterior materials 12.

In another embodiment, an exterior material 12 may be manufactured through a press process. As long as an exterior material 12 can protect a battery cell from an external shock, a method of manufacturing an exterior material is not particularly limited.

An exterior material 12 may include a body portion 13 accommodating an electrode assembly 150 and a cap portion 14 covering the body portion 13. A cap portion 14 may include a cell tab 11 electrically connecting an electrode assembly 150 to the outside.

Referring to FIG. 2 again, a body portion 13 may include an open opening portion 15. A body portion 13 may be open on both sides. A body portion 13 may be open on each of both opposing sides.

Meanwhile, a body portion 13 may include a first portion 19 and a second portion 20. A first portion 19 may form an accommodation space in which an electrode assembly may be accommodated. A first portion 19 may be formed in a hexahedral shape with openings on both opposing sides. However, the first portion 19 is not limited to the hexahedral shape, and may include various shapes forming an accommodation space for accommodating an electrode assembly.

A second portion 20 may be formed integrally with a first portion 19. A second portion 20 may be a portion where a preset region of a first portion 19 is heated and cooled. A second portion 20 may be a region where a notch portion is formed. For example, a second portion may be formed on an outer surface of a first portion 19. Accordingly, an outer surface of a first portion 19 may be heated and cooled to form a second portion 20.

Referring to FIG. 2, both sides of a body portion 13 may be open in the Y-direction. An electrode assembly 150 and an electrolyte may be accommodated inside an exterior material 12 through an opening portion 15. For example, an opening portion 15 may be provided in a hexahedral shape so that both sides may be open along the Y-direction. A cap portion 14 may cover both open sides of a body portion 13. A body portion 13 and a cap portion 14 may be combined to close an accommodation space of an exterior material 12.

A cap portion 14a, 14b may cover a body portion 13. In other words, a cap portion 14a, 14b may cover both open sides of a body portion 13, respectively, to protect components accommodated within a body portion 13. A body portion 13 and a cap portion 14a, 14b may be coupled or sealed with each other.

A battery cell 10 may further include a cell tab 11 protruding toward the outside of an exterior material 12 for electrical connection to the outside. A cell tab 11 may be provided in a cap portion 14. A battery cell 10 may include a plurality of cap portions 14a, 14b and a plurality of cell tabs 11a, 11b. A cell tab 11a, 11b may be provided in each of a plurality of cap portions 14a, 14b.

A cell tab 11 may each be connected to a cathode and an anode of a battery cell 10. A cell tab 11 may include a cathode tab 11a connected to a cathode and an anode tab 11b connected to an anode.

Referring to FIGS. 1 and 2 again, a battery cell 10 of the present disclosure may include a notch portion 30 provided on a surface of an exterior material 12. A notch portion 30 may be provided on an outer surface of an exterior material 12. A notch portion 30 may be provided in the form of a groove from an outer surface toward the inside. In other words, a notch portion 30 may be recessed from an outer surface toward the inside to form a groove.

A battery cell 10 of the present disclosure may adjust the internal pressure through a notch portion 30. A battery cell 10 may be used multiple times by repeatedly charging and discharging. The internal pressure of a battery cell 10 may increase due to a gas generated in this process. When a gas is continuously left without being discharging, a battery cell 10 may explode. Therefore, in order to use a battery cell 10 safely, it is necessary to properly adjust the pressure of a battery cell 10.

A notch portion 30 may be provided on a side of an exterior material 12 so that a gas may be discharged through the notch portion 30. In other words, the shape of a notch portion 30 may change based on the internal pressure of an exterior material 12.

When the internal pressure of an exterior material 12 increases and reaches a fracture pressure, a notch portion 30 may be opened. In other words, when the internal pressure of an exterior material 12 is lower than a fracture pressure, the shape of a notch portion 30 will be maintained. When the internal pressure of an exterior material 12 increases above a fracture pressure through continuous use of a battery cell, the shape of a notch portion 30 may change. Specifically, a notch portion 30 may be opened and a gas formed inside a battery cell may be discharged to the outside, which may cause the internal pressure to drop.

A notch portion 30 may be provided in a plural number. Through this, the pressure of a battery cell 10 may quickly drop. A notch portion 30 may be provided in a body portion 13.

A notch portion 30 may be formed integrally with an exterior material 12. For example, a notch portion 30 may be formed integrally with a body portion 13. In other words, a notch portion 30 may be formed through laser processing in a preset region of a body portion 13, rather than being manufactured separately and then joined to a body portion 13.

A notch portion 30 may be provided in a body portion so that a gas inside an exterior material can be efficiently discharged to the outside.

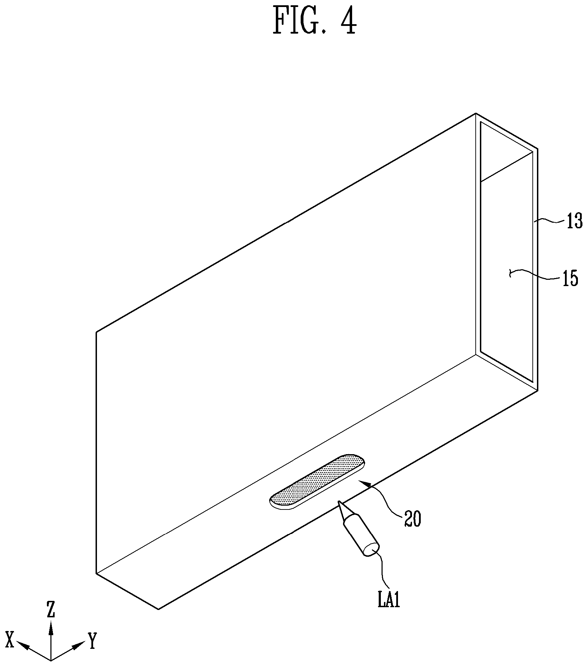

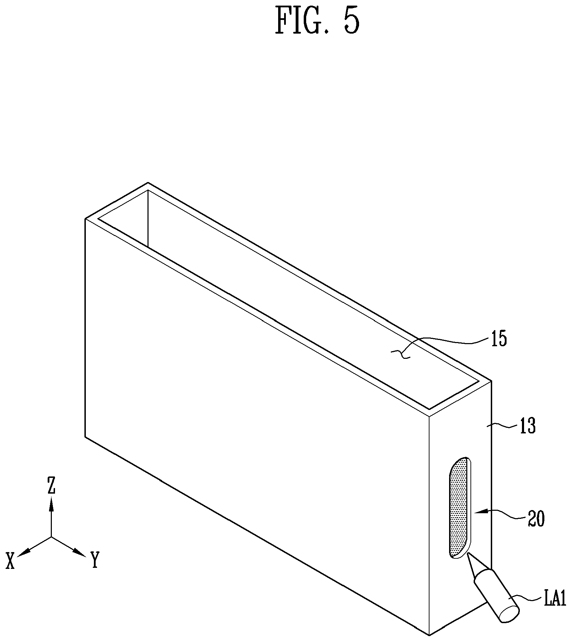

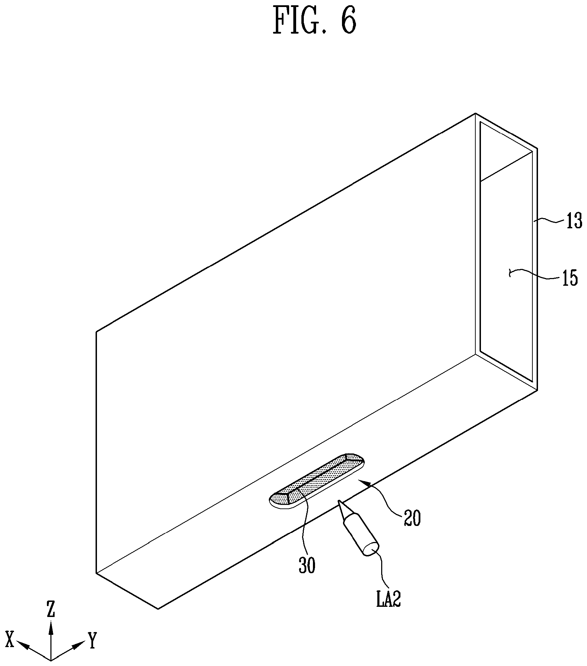

FIGS. 4 and 5 illustrate heating of an exterior material; and FIG. 6 illustrates forming of a notch portion 30 in the exterior material.

A second portion 20 of the exterior material may be heated by a laser LA1. For example, referring to FIG. 4, an outer surface of a bidirectional battery cell 10 in which both sides of a body portion 13 are open may be heated by a laser LA1.

In another embodiment, referring to FIG. 5, an outer surface of a unidirectional battery cell 10 with one side open may be heated by a laser. One side of an exterior material may be easily heated through a laser.

As a laser, a fiber laser or a diode laser may be used.

As a fiber laser, a laser with a wavelength ranging from 780 nm to 2200 nm may be used. A fiber laser has a high peak power, thereby allowing for cutting or processing of a base material. In addition, a fiber laser has a small beam size, thereby having a high energy density and allowing for intensive transmission of energy to a narrow region.

As a diode laser, a laser with a wavelength in a range from 810 nm to 1064 nm may be used. A diode laser has a lower peak power than a fiber laser, but it can transmit energy while minimizing damage to a base material. This allows for heating of a base material. In addition, a diode laser has a larger beam size than that of a fiber laser, allowing for uniform transmission of energy to a wide region.

A notch portion 30 may be formed by recessing at least a part of a second portion 20. Referring to FIGS. 4 to 6, a second portion 20 may be formed by a laser. At least a part of a second portion 20 may be recessed to form a notch portion 30. For example, a notch portion 30 may be formed by irradiating a laser to a second portion 20. A laser that heats an exterior material and a laser that forms a notch portion 30 may have different wavelengths.

For example, a first laser LA1 may heat an exterior material, and a second laser LA2 having a different wavelength from the first laser LA1 may form a notch portion 30.

In an embodiment, the pulse width of a second laser LA2 may be different from the pulse width of a first laser LA 1. The pulse width of a second laser LA2 may be shorter than the pulse width of a first laser LA1. Since the shorter the pulse width, the shorter the peak power, a thermal effect of a second laser LA2 on an exterior material may be minimized, thereby forming a groove and preventing damage to an exterior material. For example, heat damage to an exterior materials can be prevented.

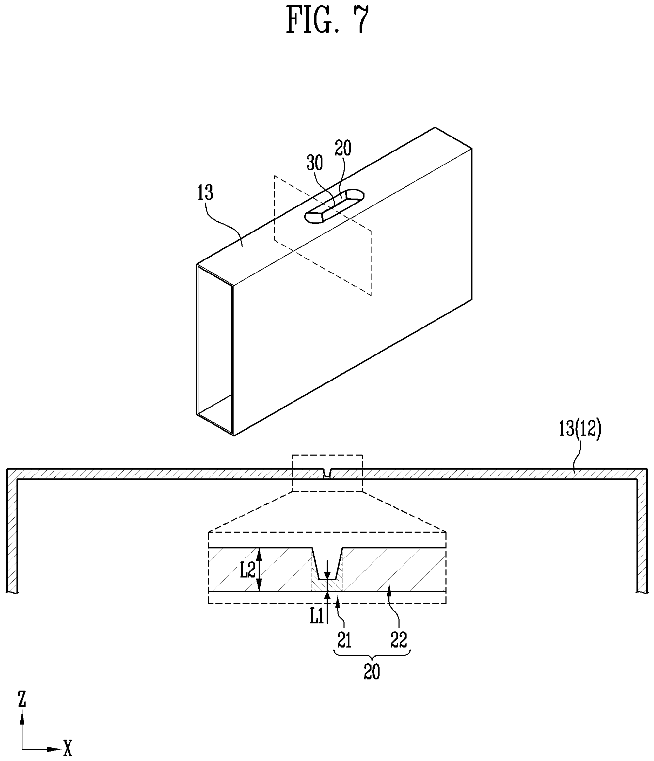

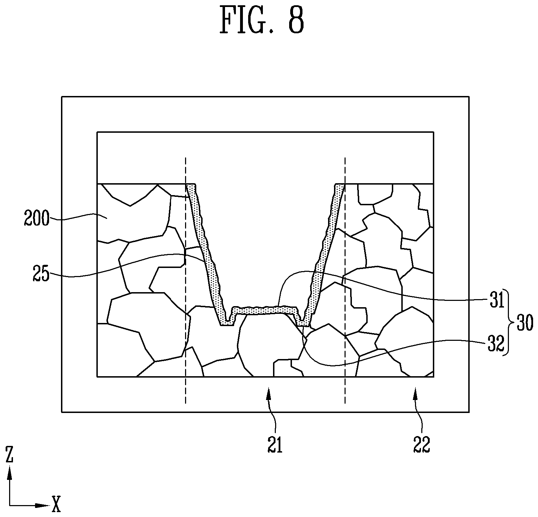

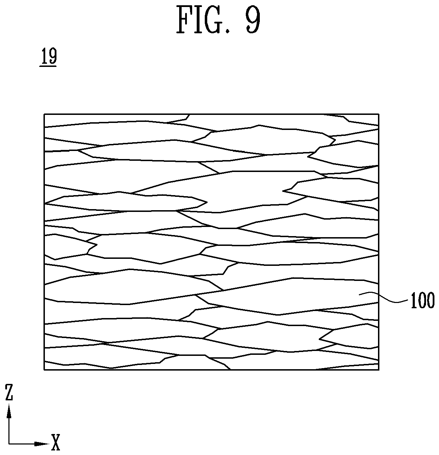

FIGS. 7 and 8 are enlarged diagrams of a notch portion 30 of the present disclosure; and FIG. 9 shows an enlarged diagram of a first portion 19 of the present disclosure.

Referring to FIG. 7, a notch portion 30 may be formed by being recessed from an outer surface of an exterior material 12 toward the inside. At least a part of a notch portion 30 may be formed to extend along one direction from an inner surface. Through this, both sides of a notch portion 30 may be spaced apart so that a gas in the inside can be easily discharged. The depth at which a notch portion 30 is recessed may be 60% or more of the thickness of an exterior material 12. In other words, referring to FIG. 7, the thickness L1 of an exterior material 12 in which a notch portion 30 is formed may be 40% or less of the thickness L2 of an exterior material 12 on which a notch portion 30 is not formed.

Specifically, FIG. 8 briefly shows an image of a cross-section of exterior material 12 taken by an electron back scatter diffraction (EBSD) method. An electron back scatter diffraction method may mount an electron back scatter diffractometer on a scanning electron microscope, inject accelerated electrons into a sample, and detect the electrons to analyze the orientation of a material. Through this, a crystal structure of exterior material 12 may be analyzed.

A second portion 20 may include a metal precipitate. A metal precipitate may be formed inside an exterior material 12 by being solidified. In an embodiment, for example, a metal precipitate may include manganese (Mn) and silicon (Si).

Referring to FIG. 7, a second portion 20 may include an overlapping portion 21 overlapping a notch portion 30 along a recession direction of the notch portion 30; and a cover portion 22 positioned on the outside of a notch portion 30 along a width direction of the notch portion 30.

In an embodiment, a cover portion 22 may have a thickness equivalent to the width of a notch portion 30 along a width direction of the notch portion 30 from both sides of an overlapping portion 21. For example, referring to FIG. 8, a recession direction in which a notch portion 30 is recessed may refer to the Z-direction, and a width direction of a notch portion 30 may refer to the X-direction. A cover portion 22 may refer to a region extending along a width direction of a notch portion 30 from both sides of an overlapping portion 21 by the length of the width of the notch portion 30.

As described above, an overlapping portion 21 may be heated by a laser. After heating, an overlapping portion 21 may include a re-solidification layer 25 that is formed as one region of an overlapping portion 21 is solidified. A re-solidification layer 25 may solidified and discolored after a part of exterior material 12 is heated. In an embodiment, a solidification region may be distinguished from other regions by color. A re-solidification layer 25 may be formed on the outside of a notch portion.

In an embodiment, the thickness of a re-solidification layer 25 along the direction from the inside of exterior material 12 toward the outside may be 5 $\mu$m (micro-meter) or more. In an embodiment, the thickness of re-solidification layer 25 may be 3 $\mu$m or more. The stability of exterior material 12 can be improved by having the above-described thickness range.

More specifically, the re-solidification layer 25 can be formed by melting and re-solidifying exterior material 12 when a pulse laser with a pulse width of 1 ns (nano-second) or more is used to the exterior material. When a pulse laser with a pulse width less than 1 ns is used, a re-solidification layer 25 may not be formed.

A re-solidification layer 25 may include a vacancy defect. Specifically, a crystal structure of the re-solidification layer 25 may include a vacancy defect. A vacancy defect is a type of point defect within a crystal structure and may be formed depending on external environments such as heat and pressure. A vacancy defect may be generated when an atom escapes a lattice region and leaves a hole or a vacancy in a crystal lattice.

Ultimately, a battery cell of the present disclosure may have a re-solidification layer 25 formed by heating and cooling some regions, and a re-solidification layer 25 may include a vacancy defect.

In an embodiment, an exterior material 12 may include a vacancy defect. In other words, the first portion 19 may also include a vacancy defect. At this time, with regard to the number of vacancy defects, the number of vacancy defects in a re-solidification layer 25 may be equal to or greater than the number of vacancy defects in first portion 19.

The number of vacancy defects may be measured by the number of vacancy defects generated in a unit volume of a material. This may exponentially increase as the temperature increases and may be calculated through Equation 1 below.

$$\text{Equation 1}$$

$$N_v = N \exp(-Q_v/kT)$$

Here, $N_v$ is the number of vacancy defects; N is the total number of potential defect sites, $Q_v$ is the activation energy; T is the temperature, in Kelvin scale; and k is the Boltzmann's constant.

The number of vacancy defects in re-solidification layer 25 calculated through Equation 1 may be equal to or greater than the number of vacancy defects in a second portion. In addition, the number of vacancy defects in a second portion may be equal to or greater than the number of vacancy defects in first portion 19.

In addition, a second portion 20 may include a plurality of crystal grains 200. A plurality of crystal grains 200 may be confirmed by observing a second portion 20 with a scanning electron microscope (SEM). A second portion 20 may be formed as an equiaxed microstructure. In other words, a plurality of crystal grains 200 may have no orientation and may have similar lengths toward the three axes. A plurality of crystal grains 200 may have isotropy. This is because an exterior material 12 is heated and crystal grains 200 grow in parallel along the three axes.

At least one crystal grain 200 among a plurality of crystal grains 200 of a second portion 20 may be partially cut. This is because a notch portion 30 is formed by etching an exterior material 12 with a laser. In other words, by etching an exterior material 12 with a laser, a notch portion 30 can be formed while minimizing heat damage to the exterior material.

Meanwhile, a first portion 19 may also include a plurality of crystal grains 100. As described above, a plurality of crystal grains 100 may be confirmed by observing a first portion with a scanning electron microscope. Referring to FIG. 9, first portion 19 may be formed to have anisotropy. That is, a plurality of crystal grains in a first portion 19 may have orientation and may have different lengths toward the three axes. This is because a process of heating a first portion 19 after pressurizing the same is omitted.

The standard deviation of the size of a plurality of crystal grains 200 included in an overlapping portion 21 may be 20 or less. In other words, the size of a plurality of crystal grains 200 included in an overlapping portion 21 may be formed to be uniform. This is because the crystal grains 200 are not subjected to an external pressure after growing by heating. In other words, laser etching may form a notch portion 30 by cutting crystal grains 200 irradiated by a laser and may not change the size of crystal grains 200 positioned in the inside of an exterior material.

The standard deviation of the size of a plurality of crystal grains 200 included in a cover portion 22 may be 20 or less. Likewise, the size of a plurality of crystal grains 200 included in a cover portion 22 may be formed to be uniform.

The sizes of a plurality of crystal grains 200 included in an overlapping portion 21 and a plurality of crystal grains 200 included in a cover portion 22 may also be formed to be uniform. An average of the size of a plurality of crystal grains 200 included in an overlapping portion 21 may be formed to have a difference of 3% or less from an average of the size of a plurality of crystal grains 200 included in a cover portion 22. That is, the sizes of a plurality of crystal grains 200 included in a second portion 20 may be formed to be uniform.

In calculating the size of a plurality of crystal grains 200 included in an overlapping portion 21 and a cover portion 22, among a plurality of crystal grains 200, crystal grains 200 overlapping a virtual line distinguishing a boundary between an overlapping portion 21 and a cover portion 22 are considered to be included in an overlapping portion 21.

In addition, among a plurality of crystal grains 200, those that are partially cut and damaged are not included in calculating an average size.

Referring to FIG. 8, notch portion 30 may include a bottom portion 31 forming a bottom surface; and a furrow 32 recessed more deeply inward from an edge of the bottom portion 31. For example, a furrow 32 may be recessed more deeply along the Z-direction at both edges of a bottom portion 31. The exterior material 12 may be heated by a laser to form a furrow.

In addition, the ten-point average roughness (Rz) of a surface of the notch portion 30 may be higher than the ten-point average roughness (Rz) of a surface of second portion 20. Here, a surface of second portion 20 may refer to the outer surface.

The ten-point average roughness is a value numerically expressing the roughness of a surface. The roughness of a surface of notch portion 30 and of a surface of second portion 20 may be measured through a known method for measuring roughness. The ten-point average roughness of a surface of notch portion 30 measured thereby may be higher than that of a surface of second portion 20. In other words, a surface of notch portion 30 may be formed to be rougher than a surface of second portion 20.

This is because notch portion 30 is formed using a laser. When notch portion 30 is formed using a press method rather than a laser, a pressurized surface may be formed to be flat. However, in the present disclosure, notch portion 30 is formed using a laser so that a surface of notch portion 30 is formed to be rough. Specifically, the ten-point average roughness of a surface of notch portion 30 may exceed 20.

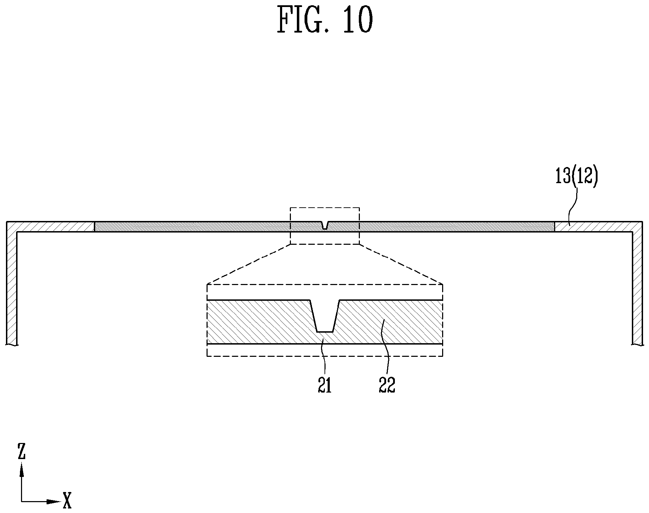

FIGS. 10 to 12 illustrate various embodiments of a battery cell.

A region of exterior material 12 that is heated by a laser is not particularly limited. Referring to FIG. 9, a region of exterior material 12 that is heated by a laser may extend along the X-direction on one surface of a body portion.

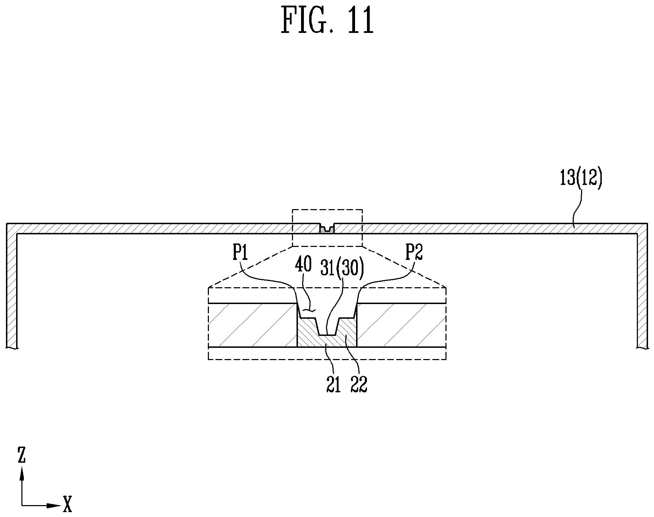

Referring to FIG. 11, a battery cell 10 of the present disclosure may further include a venting portion 40. Venting portion 40 may be formed by recessing at least one of an inner surface of exterior material 12 and an outer surface provided in a direction opposite to the inner surface. Second portion 20 may include the venting portion 40. In other words, the venting portion 40 may be formed in the second portion 20.

Notch portion 30 and venting portion 40 may be positioned to overlap along a recession direction in which the venting portion 40 is recessed. In other words, the notch portion 30 may be positioned inside the venting portion 40. Venting portion 40 is intended to make the exterior material 12 thin. Through this, when the internal pressure of the battery cell 10 increases, the notch portion 30 may be easily opened.

Due to the notch portion 30 and the venting portion 40, the exterior material 12 may be formed to be thin. Through this, when the internal pressure of the battery cell 10 increases and reaches a fracture pressure, the notch portion 30 may be opened.

Referring to FIG. 11 again, the width of the second portion 20 and the width of the venting portion 40 may be provided to be equal. The width of the venting portion 40 may be defined from a recession start point P1 of the venting portion 40 to a recession end point P2 of the venting portion 40 along the X-direction. A region between the recession start point P 1 and the recession end point P2 may be heated so that the second portion 20 may be positioned to overlap the venting portion 40.

Through this, the notch portion 30 may fracture earlier than other regions of the battery cell 10. That is, the exterior material 12 may be heated to change physical properties thereof and may have a thin thickness so that the notch portion 30 may be opened earliest among the other regions when the internal pressure increases.

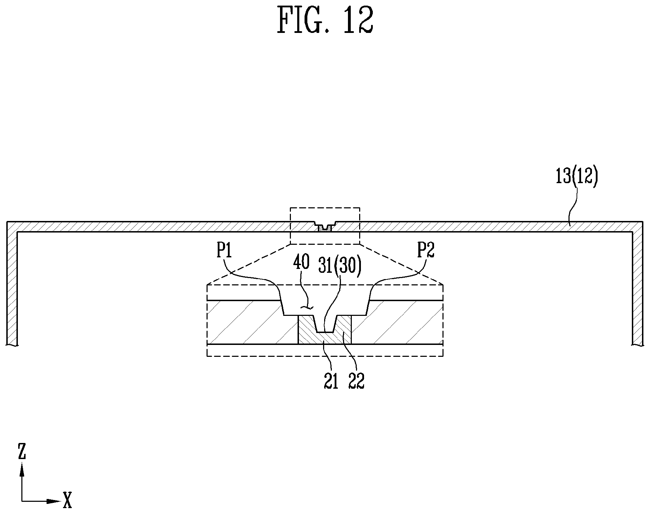

In another embodiment, the width of the venting portion 40 may be provided to be longer than the width of the second portion 20. Referring to FIG. 12, only a part of a region from recession start point P1 where exterior material 12 starts to recess to recession end point P2 may be heated. Through this, when the pressure increases, notch portion 30 may open earlier than other regions of battery cell 10.

The notch portion 30 may include a same material as the exterior material 12. In other words, the notch portion 30 may include an internal adhesive layer, an external insulating layer, and a metal layer. Through this, the notch portion 30 may perform same functions as the exterior material 12. For example, the notch portion 30 may protect an electrode assembly from an external shock.

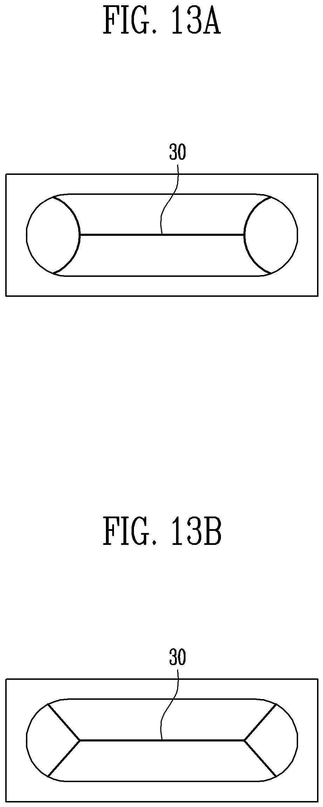

FIGS. 13A to 13C illustrate various embodiments of the notch portion 30 of the present disclosure.

A notch portion 30 may be provided in various shapes. To this end, first region may be provided in various shapes. Since a laser is irradiated to a first region to form a notch portion 30, a notch portion 30 may be formed in a shape corresponding to a first region.

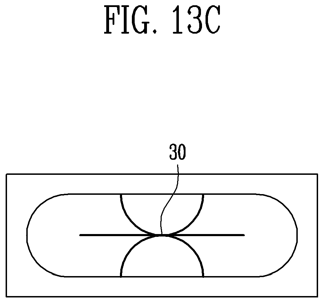

Referring to FIG. 13A, the notch portion 30 may be provided as a line with a central region extending in one direction and with one end and the other end having a curvature. Referring to FIG. 13B, the notch portion 30 may have a central region extending in one direction and one end and the other end having a straight line. Referring to FIG. 13C, notch portion 30 may further include a line having a central region extending in one direction and having the shape of an arc. The shape of the notch portion 30 is not limited as long as it may be opened on an outer surface of an exterior material.

The present disclosure may be modified and implemented in various forms, and its scope is not limited to the embodiments described above. Therefore, various modifications and alterations may be made without departing from the scope present disclosure of the present disclosure.

**Claims**

1. A battery cell comprising:

   an electrode assembly including a cathode, an anode, and a separator; and
   an exterior material accommodating the electrode assembly therein,
   wherein the exterior material includes: a first portion forming an accommodation space in which the electrode assembly is accommodated; a second portion formed integrally with the first portion; and a notch portion formed by recessing at least a part of the second portion and having a re-solidification layer on an outside of the second portion, and
   wherein the second portion includes a plurality of crystal grains, and the plurality of crystal grains of the second portion include an equiaxed microstructure.

2. The battery cell according to claim 1, wherein the first portion includes a plurality of crystal grains, and the plurality of crystal grains of the first portion are formed in an anisotropic structure.

3. The battery cell according to claims 1 or 2, wherein the notch portion is formed by recessing an outer surface of the exterior material toward inside of the battery cell and has a groove shape.

4. The battery cell according to any one of the preceding claims, wherein the ten-point average roughness of a surface of the notch portion is higher than the ten-point average roughness of the second portion.

5. The battery cell according to any one of the preceding claims, wherein at least one crystal grain among the plurality of crystal grains are partially cut.

6. The battery cell according to claim 5, wherein the second portion includes: an overlapping portion overlapping the notch portion along a recession direction of the notch portion; and a cover portion positioned outside the notch portion along a width direction of the notch portion, which is formed to be perpendicular to a recession direction of the notch portion.

7. The battery cell according to claim 6, wherein a standard deviation of sizes of the plurality of crystal grains included in the overlapping portion is 20 or less.

8. The battery cell according to claim 6, wherein a standard deviation of sizes of the plurality of crystal grains included in the cover portion is 20 or less.

9. The battery cell according to claim 6, wherein the difference between an average value of the sizes of the plurality of crystal grains included in the overlapping portion and an average value of the sizes of the plurality of crystal grains included in the cover portion is 3% or less.

10. The battery cell according to any one of the preceding claims, wherein the exterior material further includes: a body portion accommodating the electrode assembly and having the first portion and the second portion; and a cap portion including a cell tab that electrically connects the electrode assembly to outside and covering the body portion, wherein the notch portion is provided in the body portion.

11. The battery cell according to any one of the preceding claims, wherein exterior material further includes a venting portion formed by recessing at least one surface of an inner surface of the exterior material and an outer surface provided in an opposite direction of the inner surface, wherein the notch portion and the venting portion are positioned to be overlapping along a recession direction in which the at least one surface is recessed.

12. The battery cell according to any one of the preceding claims, wherein the notch portion is formed integrally with the exterior material.

13. The battery cell according to any one of the preceding claims, wherein the re-solidification layer includes a vacancy defect.

14. The battery cell according to any one of the preceding claims, wherein the number of vacancy defects in the re-solidification layer is equal to or greater than the number of vacancy defects in the second portion.

15. The battery cell according to claim 14, wherein the number of vacancy defects in the second portion is equal to or greater than the number of vacancy defects in the first portion.

# FIG. 1

# FIG. 2

# FIG. 3

# FIG. 4

# FIG. 5

# FIG. 6

# FIG. 7

# FIG. 8

# FIG. 9

19

100

# FIG. 10

13(12)

21    22

Z
↑
→ X

# FIG. 11

13(12)

P1  P2

40 31(30)

21 22

Z
X

# FIG. 12

13(12)

P1    P2

40   31(30)

21  22

Z
X

FIG. 13A

30

FIG. 13B

30

# FIG. 13C

30

Europäisches
Patentamt

European
Patent Office

Office européen
des brevets

# EUROPEAN SEARCH REPORT

**Application Number**

EP 24 19 7564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 945 206 A1 (SAMSUNG SDI CO LTD [KR]) 18 November 2015 (2015-11-18) <br> * figures 1,2 * <br> * paragraph [0032] * <br> * claims * <br> * paragraph [0008] - paragraph [0022] * <br> * paragraph [0029] - paragraph [0032] * <br> * figures 5a,5b * <br> * paragraph [0041] - paragraph [0058] * <br> - - - - - | 1-15 | INV. <br> H01M50/103 <br> H01M50/117 <br> H01M50/124 <br> H01M50/131 <br> H01M50/342 |
| Y | EP 3 339 461 A1 (NIPPON STEEL & SUMIKIN MAT CO [JP]) 27 June 2018 (2018-06-27) <br> * paragraph [0101] * <br> * paragraph [0009] - paragraph [0010] * <br> * paragraph [0023] - paragraph [0024] * <br> * paragraph [0029] - paragraph [0056] * <br> * paragraph [0067] - paragraph [0082] * <br> - - - - - | 1-3,6,12 | |
| Y | EP 3 174 126 A1 (SAMSUNG SDI CO LTD [KR]) 31 May 2017 (2017-05-31) <br> * figures 1-5 * <br> * claims * <br> * paragraph [0039] - paragraph [0041] * <br> - - - - - | 1-3,6,12 | TECHNICAL FIELDS SEARCHED (IPC) <br><br> H01M |

The present search report has been drawn up for all claims

| Place of search | Date of completion of the search | Examiner |
|---|---|---|
| The Hague | 15 January 2025 | Whelan, Natalie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    .....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 7564

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | | Publication date | Patent family member(s) | | Publication date |
|---|---|---|---|---|---|
| EP 2945206 | A1 | 18-11-2015 | CN | 105098107 A | 25-11-2015 |
| | | | EP | 2945206 A1 | 18-11-2015 |
| | | | JP | 6630492 B2 | 15-01-2020 |
| | | | JP | 2015220229 A | 07-12-2015 |
| | | | KR | 20150131531 A | 25-11-2015 |
| | | | US | 2015333300 A1 | 19-11-2015 |
| EP 3339461 | A1 | 27-06-2018 | CN | 107002203 A | 01-08-2017 |
| | | | EP | 3339461 A1 | 27-06-2018 |
| | | | JP | 6165369 B1 | 19-07-2017 |
| | | | JP | WO2017030148 A1 | 17-08-2017 |
| | | | KR | 20170095291 A | 22-08-2017 |
| | | | TW | 201725273 A | 16-07-2017 |
| | | | US | 2018229476 A1 | 16-08-2018 |
| | | | WO | 2017030148 A1 | 23-02-2017 |
| EP 3174126 | A1 | 31-05-2017 | CN | 106803553 A | 06-06-2017 |
| | | | EP | 3174126 A1 | 31-05-2017 |
| | | | KR | 20170060941 A | 02-06-2017 |
| | | | US | 2017149030 A1 | 25-05-2017 |

EPO FORM P0459

For more details about this annex : see Official Journal of the European Patent Office, No. 12/82